# EUROPÄISCHE PATENTSCHRIFT

(11) **EP 2 429 680 B1**
(45) Veröffentlichungstag und Bekanntmachung des Hinweises auf die Patenterteilung: **02.07.2014**
(21) Anmeldenummer: 10721972.7
(22) Anmeldetag: 12.05.2010
(51) Int. Cl.: D03D 15/00, D03D 13/00, B01D 39/08

(54) **FILTERGEWEBE FÜR EINEN BANDFILTER**
WOVEN FILTER FABRIC FOR A BAND FILTER
TISSU FILTRANT POUR FILTRE À BANDE

(30) Priorität: 14.05.2009 DE 102009021398; 23.12.2009 DE 102009060252; 11.02.2010 DE 102010007553
(43) Veröffentlichungstag der Anmeldung: 21.03.2012
(73) Patentinhaber: SMS Siemag Aktiengesellschaft, 40237 Düsseldorf (DE)
(72) Erfinder: GIER-ZUCKETTO, Joachim, 52146 Würselen (DE); BARTEL, Matthias, A-1230 Wien (AT); VOGL, Dieter, 3424 Wolfpassing (AT); KUHLMANN, Joachim, 57223 Kreuztal (DE)
(74) Vertreter: Klüppel, Walter
(86) Internationale Anmeldenummer: PCT/EP2010/002891
(87) Internationale Veröffentlichungsnummer: WO 2010/130412

(56) Entgegenhaltungen:
- EP-A1- 1 116 510
- US-A1- 2005 106 970

## Beschreibung

Die vorliegende Erfindung betrifft ein Filtergewebe für einen Bandfilter, insbesondere zur Verwendung bei einer hydrothermalen Säureregeneration.

Bei einer hydrothermalen Säureregeneration fallen Eisenoxide, insbesondere Fe₂O₃ aus einer etwa 75%-gen wässrigen FeCl₃-Lösung bei einer Temperatur von etwa 170 °C aus und werden abfiltriert.

Bei einer hydrothermalen Säureregeneration geht es bei der Metallverarbeitung, insbesondere nach Beizen von Metallbändern, um die Regeneration von Salzsäure, die mit FeCl₂ verunreinigt ist. Dabei erfolgen die folgenden Verfahrensschritte.
(1) Die FeCl₂ enthaltende Salzsäure wird aufkonzentriert.
(2) FeCl₂ wird mit O₂ bei 150 °C und 7 bar zu FeCl₃ aufoxidiert:

   2 FeCl₂ + 2 HCl + ½ O₂ → 2 FeCl₃ + H₂O
(3) Fe₂O₃ fällt bei einer Hydrolyse bei 170 °C und Atmosphärendruck aus. Wiederverwendbare 18 % - 30 % Salzsäure wird gewonnen:

   2 FeCl₃ + 3 H₂O → Fe₂O₃ ↓ + 6 HCl t

Fe₂O₃ wird in der industriellen Herstellung über einen Bandfilter von der Lösung abgetrennt. Ein Bandfilter ist zum Abtrennen von festen Stoffen von Flüssigkeiten in der industriellen Herstellung sehr nützlich. Die zu filtrierende Flüssigkeit wird auf die Filtervlies-Bahn geleitet. Die festen Partikel werden auf dem Filtervlies zurückgehalten. Die gereinigte Flüssigkeit fließt in das Vorratsbecken und kann von dort zurück zur Wiederverwendung oder zur Entsorgung abgeleitet werden. Der auf dem Vlies zurückbleibende Rückstand bildet einen Filterkuchen. Verhindert die Dichte des Filterkuchens einen optimalen Abfluss der Flüssigkeit, so wird der Filterkuchen zusammen mit dem Vlies automatisch in ein Abfallbecken transportiert. Der ganze Vorgang geschieht kontinuierlich und vollautomatisch, ohne dass der Flüssigkeitsstrom unterbrochen wird.

In der EP 1 116 510 wird ein Filtermaterial zum Staubabscheiden für einen Hochtemperatur-Ofen beschrieben. Das Filtergewebe weist ein Grundgewebe aus gewebtem oder gestricktem Material aus hitzebeständigen Fasern und einer Filzschicht aus fluorhaltigem Harz auf. Dabei handelt es sich beispielsweise um PTFE Stapelfasern.

Es hat sich gezeigt, dass die bekannten Filtertücher nicht geeignet sind, um bei einem Vakuumbandfilter eingesetzt zu werden.

Aufgabe der vorliegenden Erfindung ist ein Filtergewebe für einen Bandfilter bereitzustellen, das die Anforderungen für die Beständigkeit und Leistungsfähigkeit eines Bandfilters zum Abtrennen von Eisenoxiden aus saueren heißen Lösungen unter Vakuum erfüllt.

Die Aufgabe der vorliegenden Erfindung wird durch ein Filtergewebe für einen Bandfilter gelöst, wobei das Filtergewebe eine Luftdurchlässigkeit von 100 l/(min*dm²) bis 350 l/(min*dm²) aufweist und die Fasern des Filtergewebes eine Faserdicke von 25 µm bis 35 µm aufweisen und 50 Gew.-% bis 100 Gew.-% Perfluoralkoxylalkan (PFA) enthalten.

Im Sinne der Erfindung bedeutet die Luftdurchlässigkeit Volumen Luft in Liter pro Zeit in Minuten und pro Fläche in dm², l/min/dm², angegeben als l/(min*dm²).

Das erfindungsgemäße Filtertuch ist aufgrund der Beständigkeit und Leistungsfähigkeit für einen Bandfilter zum Abtrennen von Eisenoxiden aus saueren heißen Lösungen unter Vakuum geeignet.

Perfluoralkoxylalkan (PFA) ist ein vollständig fluoriertes Polymer, ein Copolymer aus Polytetrafuorethylen (PTFE) und Poly-(perfluorvinylmethylether). PFA ist thermoplastisch verarbeitbar, wie zum Beispiel durch Spritzgießen oder Polymerschweißen. PFA hat eine geringe Festigkeit und Härte.

Eine bevorzugte Ausgestaltung der Erfindung ist ein Filtergewebe für einen Bandfilter, wobei die Fasern eine Faserdicke von 28 µm bis 32 µm aufweisen. In diesem Bereich für die Faserdicke werden sehr gute Ergebnisse erzielt. Für ein Vakuumbandfilter werden ganz besonders gute Ergebnisse mit einem Monofilament aus PFA mit einer Dicke von etwa mindestens 30 µm erreicht.

Eine bevorzugte Ausgestaltung der Erfindung ist ein Filtergewebe für einen Bandfilter, wobei die Fasern des Filtergewebes von 90 Gew.-% bis 100 Gew.-% PFA enthalten. Die besten Ergebnisse werden mit Fasern erreicht, die PFA im Bereich von 90 Gew.-% bis 100 Gew.-% enthalten.

Eine bevorzugte Ausgestaltung der Erfindung ist ein Filtergewebe für einen Bandfilter, wobei das Filtergewebe eine Luftdurchlässigkeit von 100 l/(min*dm²) bis 200 l/(min*dm²) aufweist. In diesem Bereich werden sehr gute Filtrierergebnisse erreicht.

Eine bevorzugte Ausgestaltung der Erfindung ist ein Filtergewebe für einen Bandfilter, wobei das Filtergewebe 25 bis 35 Kettfäden und 15 bis 25 Schussfäden pro 1 cm aufweist. In diesen Bereichen für die Kettfäden und Schlussfäden werden gute Ergebnisse für das Filtergewebe erzielt.

Eine bevorzugte Ausgestaltung der Erfindung ist ein Filtergewebe für einen Bandfilter, wobei das Filtergewebe mehr als 7000 mm lang, vorzugsweise 7000 mm bis 8000 mm lang, und von 700 mm bis 1.800 mm breit ist. Ein Bandfilter ist mit diesen Ausmaßen besonders gut geeignet und gut verwendbar.

Ein weiter Aspekt der Erfindung ist ein Verfahren zur Herstellung eines Filtergewebes für einen Bandfilter mit einer Luftdurchlässigkeit von 100 l/(min*dm²) bis 350 l/(min*dm²), wobei die Fasern mit einer Faserdicke von 25 µm bis 35 µm und mit 50 Gew.-% bis 100 Gew.-% PFA zu einem Filtergewebe mit 25 bis 35 Kettfäden und 15 bis 25 Schussfäden pro 1 cm gewebt werden.

Ein weiter Aspekt der Erfindung ist die Verwendung des erfindungsgemäßen Filtergewebes für einen Bandfilter zur Abtrennung von festen Eisenoxiden, insbesondere Fe₂O₃ aus einer saueren heißen wässrigen FeCl₃-Lösung, insbesondere bei einer hydrothermalen Säureregeneration.

Die Erfindung wird anhand einer Zeichnung und eines Beispiels näher erläutert.

Es zeigen:
- Figur 1: eine perspektivische Draufsicht auf ein erfindungsgemäßes Filtergewebe,
- Figur 2: eine perspektivische Explosionszeichnung einer Nutsche mit Deckel
und
- Figur 3: eine perspektivische Darstellung einer Laborapparatur zum Testen eines Filtergewebes.

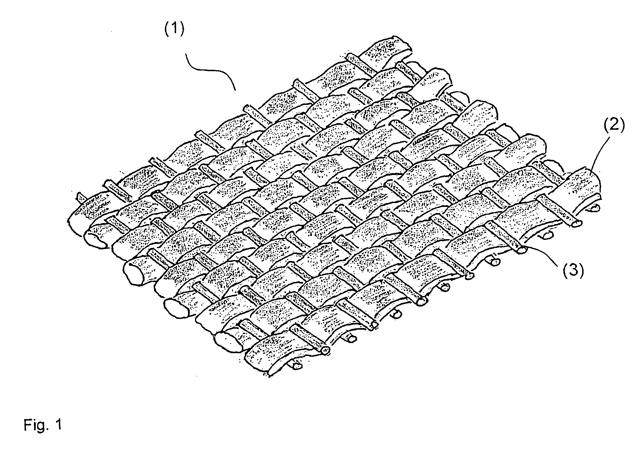

Das in Fig. 1 gezeigte Filtergewebe 1 wird mit einem PFA-Monofil-Standartfaden mit einer dicke von etwa 27 µm, mit einer Luftdurchlässigkeit von 100 l/(min*dm²) 200 l/(min*dm²) und 350 l/(min*dm²) hergestellt. Dabei werden Schussfaden 2 und Kettfaden 3 zu einem 8000 mm langen mal 800 mm breiten Filtergewebe 1 mit 31 Kettfaden und 20 Schussfaden pro 1 cm gewebt. Nach dem Weben wird das Filtergewebe 1 drei mal zum Einstellen der Luftdurchlässigkeit kalandiert. Wärme und Druck werden über Heiz- und Kühlwalzen in das Gewebe gebracht. Dabei schrumpft das Gewebe um etwa 10 % auf 31 Fäden pro 0,7 cm und 7000 mm Länge sowie 700 mm Breite.

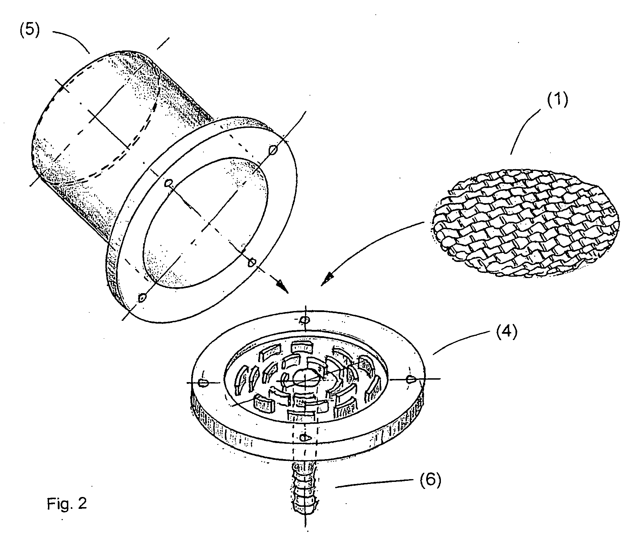

Die in Fig. 2 gezeigte Nutsche 4 mit Deckel 5 stellen die wichtigen Teile einer Laborapparatur zum Testen eines Filtergewebes 1 dar. Das Filtergewebe 1 wird auf die Nutsche 4 gelegt und die Nutsche 4 mit dem Deckel 5 verschraubt. Die Nutsche 4 weist im unteren Bereich einen Absaugstutzen 6 auf. An den Absaugstutzen 6 wird ein Vakuumschlauch 9 angeschlossen.

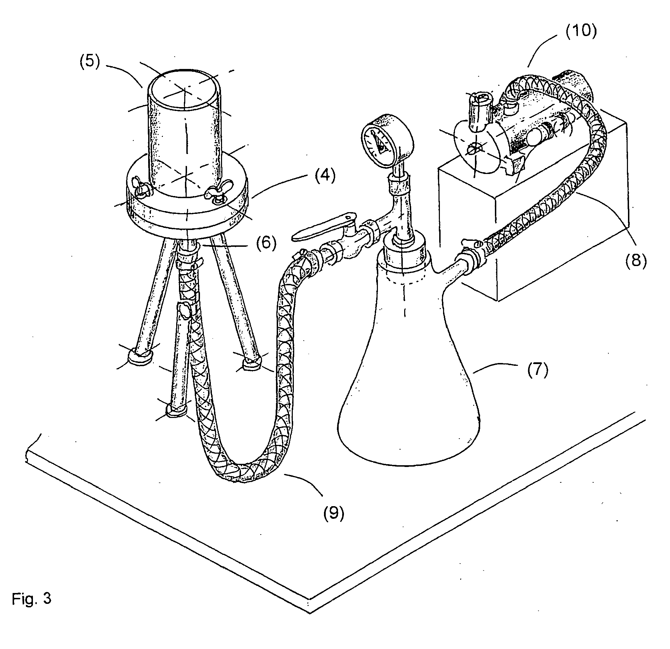

In Fig. 3 wird die gesamte Laborapparatur zum Testen eines Filtergewebes gezeigt. Der Vakuumschlauch 9 führt vom Ansaugstutzen 6 der Nutsche 4 zum Druckausgleichsgefäß 7. Am Druckausgleichgefäß 7 ist ein zweiter Vakuumschlauch 8 angeschlossen, der direkt zur Vakuumpumpe 10 führt.

### Beispiel

Um die Wirksamkeit des erfindungsgemäßen Filtergewebes 1 beurteilen zu können, wurden drei vom Aufbau her gleiche Filter mit unterschiedlichen Materialien hergestellt. Es wurden neben dem erfindungsgemäßen Perfluoralkoxylalkan (PFA) die folgenden Polyphenylensulfid (PPS) und Polyetheretherketon (PEEK) getestet. Die Eigenschaften der drei Filtergewebe gehen aus der Tabelle 1 hervor.

**Tabelle 1: Eigenschaften der Filtergewebe**

| Material | Fadendicke | Webtechnik pro 1 cm | Luftdurchlässigkeit |
|---|---|---|---|
| PFA | 27 µm | 31 Kettfaden | 350 l/(min*dm²) |
| | | 20 Schussfaden | |
| PPS | 27 µm | 31 Kettfaden | 350 l/(min*dm²) |
| | | 20 Schussfaden | |
| Peek | 27 µm | 31 Kettfaden | 350 l/(min*dm²) |
| | | 20 Schussfaden | |

Der Filtrationsversuch wurde wie folgt durchgeführt. 450 g FeCl₃ wurden mit 60 g Fe₂O₃ versetzt. Das Feststoffgemisch wurde mit 150 ml Wasser versetzt. Die Suspension wurde auf 170 °C unter ständigem Rühren in einem Becherglas erhitzt. Dabei ist FeCl₃ in Lösung gegangen und es bildete sich eine 75 % FeCl₃-Lösung. Der Inhalt des Becherglases wurde ruckartig auf das Filtergewebe 1 gegeben. Im Becherglas verblieb kein Rückstand. Der Deckel / Becheraufsatz 5 wurde zuvor auf die Nutsche 4 gesetzt und an der Unterseite des Filtertuches 1 wurde am Ansaugstutzen 6 ein Vakuum von 600 mbar angelegt. Der Filterkuchen bildete sich innerhalb von 10 s bis 15 s. Am Filtergewebe 1 waren keine Veränderungen feststellbar. Die Ergebnisse und der Vergleich zwischen dem erfindungsgemäßen PFA und PPS sowie Peek gehen aus Tabelle 2 hervor.

**Tabelle 2: Vergleich der Ergebnisse der Filterversuche**

| Material | Ergebnis | Gehalt auf dem Filter | Zeit |
|---|---|---|---|
| PFA | Filterkuchen auf dem Filter | 58,5 g Fe₂O₃ | 15 s |
| PPS | Filter festgesetzt | Filterrückstand und Suspension | 8 s |
| Peek | Filter festgesetzt | Filterrückstand und Suspension | 8 s |

Das erfindungsgemäße Filtermaterial 1 PFA wurde nicht beschädigt. Es waren selbst bei der Wiederholung des Filtrierversuchs keine Veränderungen des PFA Filtergewebes 1 feststellbar. Die Vergleichsfilter PPS und Peek versagten bei der Filtration und wiesen Schäden auf.

Die Analyse des Filterkuchens beim erfindungsgemäßen Filter 1 hat gezeigt, dass die Korngrößen des Fe₂O₃ von 10 µm bis 50 µm betrugen.

Die Versuche wurden mit dem erfindungsgemäßen PFA Filtergewebe 1 mit 200 l/(min*dm²) und 100 l/(min*dm²) durchgeführt. Als Ergebnis der Versuche stand fest, dass mit der Verkleinerung der Luftdurchlässigkeit auch der Rückhalt der feinsten Partikel größer wurde ohne dass die Filtrationszeit signifikant verlängert wurde. Das Filter bildet sich erst mit dem Aufbau des Filterkuchens und beeinflusst über die Partikelgröße den Grad der Filtration.

Die erhaltenen Ergebnisse waren für den Fachmann überraschend und unerwartet.

### Bezugszeichenliste

(1) Filtergewebe / Filtertuch / Filter
(2) Schussfaden / Schussfaser
(3) Kettfaden / Kettfaser
(4) Nutsche
(5) Deckel / Becheraufsatz
(6) Absaugstützen
(7) Kühlfalle / Druckausgleichsgefäß
(8) Vakuumschlauch
(9) Vakuumschlauch
(10) Vakuumpumpe

## Patentansprüche

1. Filtergewebe für einen Bandfilter, wobei das Filtergewebe (1) eine Luftdurchlässigkeit von 100 l/(min*dm²) bis 350 l/(min*dm²) aufweist und Fasern des Filtergewebes (1) eine Faserdicke von 25 µm bis 35 µm aufweisen und 50 Gew.-% bis 100 Gew.-% Perfluoralkoxylalkan (PFA) enthalten.

2. Filtergewebe für einen Bandfilter nach Anspruch 1, wobei die Fasern eine Faserdicke von 28 µm bis 32 µm aufweisen.

3. Filtergewebe für einen Bandfilter nach Anspruch 1 oder 2, wobei die Fasern des Filtergewebes von 90 Gew.-% bis 100 Gew.-% Perfluoralkoxylalkan (PFA) enthalten.

4. Filtergewebe für einen Bandfilter nach einem der Ansprüche 1 bis 3, wobei das Filtergewebe (1) eine Luftdurchlässigkeit von 100 l/(min*dm²) bis 200 l/(min*dm²) aufweist.

5. Filtergewebe für einen Bandfilter nach einem der Ansprüche 1 bis 4, wobei das Filtergewebe (1) 25 bis 35 Kettfäden (3) und 15 bis 25 Schussfäden (2) pro 1 cm aufweist.

6. Filtergewebe für einen Bandfilter nach einem der Ansprüche 1 bis 5, wobei das Filtergewebe (1) von 7000 mm bis 8000 mm lang und von 700 mm bis 800 mm breit ist.

7. Verfahren zur Herstellung eines Filtergewebes für einen Bandfilter mit einer Luftdurchlässigkeit von 100 l/(min*dm²) bis 350 l/(min*dm²) wobei Fasern mit einer Faserdicke von 25 µm bis 35 µm und mit 50 Gew.-% bis 100 Gew.-% Perfluoralkoxylalkan (PFA) zu einem Filtergewebe (1) gewebt werden.

8. Verwendung eines Filtergewebes für einen Bandfilter nach einem der Ansprüche 1 bis 6 zur Abtrennung von Metalloxiden aus sauren heißen Lösungen.

9. Verwendung eines Filtergewebes für einen Bandfilter nach einem der Ansprüche 1 bis 6 zur Abtrennung von festen Eisenoxiden, insbesondere Fe₂O₃ aus einer saueren heißen wässrigen FeCl₃-Lösung.

10. Verwendung eines Filtergewebes für einen Bandfilter nach einem der Ansprüche 1 bis 6 zur Abtrennung von festen Eisenoxiden, insbesondere Fe₂O₃ bei einer hydrothermalen Säureregeneration.

## Claims

1. Filter cloth for a belt filter, wherein the filter cloth (1) has an air permeability of 100 l/(min*dm²) to 350 l/(min*dm²) and the fibres of the filter cloth (1) have a thickness of 25 µm to 35 µm and contain 50% by weight to 100% by weight of perfluoroalkoxylalkane (PFA).

2. Filter cloth for a belt filter according to claim 1, wherein the fibres have a fibre thickness of 28 µm to 32 µm.

3. Filter cloth for a belt filter according to claim 1 or 2, wherein the fibres of the filter cloth contain 90% by weight to 100% by weight of perfluoroalkoxylalkane (PFA).

4. Filter cloth for a belt filter according to any one of claims 1 to 3, wherein the filter cloth (1) has an air permeability of 100 l/(min*dm²) TO 200 l/(min*dm²).

5. Filter cloth for a belt filter according to any one of claim 1 to 4, wherein the filter cloth (1) has 25 to 35 warp threads (3) and 15 to 25 weft threads (2) per 1 cm.

6. Filter cloth for a belt filter for according to any one of claims 1 to 5, wherein the filter cloth (1) has a length of 7,000 mm to 8,000 mm and a width of 700 mm to 800 mm.

7. Method of producing a filter cloth for a belt filter with an air permeability of 100 l/(min^{*}dm²) to 350 l/(min*dm²), wherein fibres with a fibre thickness of 25 µm to 35 µm and with 50% by weight to 100% by weight of perfluoroalkoxylalkane (PFA) are woven to form a filter cloth (1).

8. Use of a filter cloth for a belt filter according to any one of claims 1 to 6 for the separation of metal oxides from acidic hot solutions.

9. Use of a filter cloth for a belt filter according to any one of claims 1 to 6 for the separation of solid ferric oxides, in particular Fe₂O₃, from an acidic hot aqueous FeCl₃ solution.

10. Use of a filter cloth for a belt filter according to any one of claims 1 to 6 for the separation of solid ferric oxides, in particular Fe₂O₃, in hydrothermal acid regeneration.

## Revendications

1. Tissu filtrant pour un filtre passe-bande, le tissu filtrant (1) présentant une perméabilité à l'air de 100 l/(min*dm²) à 350 l/(min*dm²) et les fibres du tissu filtrant (1) présentant une épaisseur de fibre de 25 µm à 35 µm et contenant de 50 % en poids à 100 % en poids de perfluoroalcoxyalcane (PFA).

2. Tissu filtrant pour un filtre passe-bande selon la revendication 1, dans lequel les fibres présentent une épaisseur de fibre de 28 µm à 32 µm.

3. Tissu filtrant pour un filtre passe-bande selon la revendication 1 ou 2, dans lequel les fibres du tissu filtrant contiennent de 90 % en poids à 100 % en poids de perfluoroalcoxyalcane (PFA).

4. Tissu filtrant pour un filtre passe-bande selon l'une quelconque des revendications 1 à 3, dans lequel le tissu filtrant (1) présente une perméabilité à l'air de 100 l/(min*dm²) à 200 l/(min*dm²).

5. Tissu filtrant pour un filtre passe-bande selon l'une quelconque des revendications 1 à 4, dans lequel le tissu filtrant (1) présente de 25 à 35 fils de chaîne (3) et de 15 à 25 fils de trame (2) par cm.

6. Tissu filtrant pour un filtre passe-bande selon l'une quelconque des revendications 1 à 5, dans lequel le tissu filtrant (1) possède une longueur de 7000 mm à 8000 mm et une largeur de 700 mm à 800 mm.

7. Procédé pour la fabrication d'un tissu filtrant pour un filtre passe-bande comprenant une perméabilité à l'air de 100 l/(min*dm²) à 350 l/(min*dm²), dans lequel on tisse des fibres possédant une épaisseur de fibre de 25 µm à 35 µm et comprenant de 50 % en poids à 100 % en poids de perfluoroalcoxyalcane (PFA) pour obtenir un tissu filtrant (1).

8. Utilisation d'un tissu filtrant pour un filtre passe-bande selon l'une quelconque des revendications 1 à 6, pour la séparation d'oxydes métalliques à partir de solutions acides chaudes.

9. Utilisation d'un tissu filtrant pour un filtre passe-bande selon l'une quelconque des revendications 1 à 6, pour la séparation d'oxydes de fer solides, en particulier de Fe₂O₃ à partir d'une solution aqueuse acide chaude de FeCl₃.

10. Utilisation d'un tissu filtrant pour un filtre passe-bande selon l'une quelconque des revendications 1 à 6, pour la séparation d'oxydes de fer solides, en particulier de Fe₂O₃ lors d'une régénération hydrothermique d'acide.
